Europäisches Patentamt

(19) European Patent Office

Office européen des brevets

(11) Numéro de publication: **0 030 884**
**B1**

(12) **FASCICULE DE BREVET EUROPEEN**

(45) Date de publication du fascicule du brevet: **27.03.85**

(21) Numéro de dépôt: **80401707.7**

(22) Date de dépôt: **28.11.80**

(51) Int. Cl.⁴: **G 21 C 19/44**, B 01 D 11/02

(54) **Appareil pour traiter des composés dans un liquide.**

(30) Priorité: **18.12.79 FR 7930952**

(43) Date de publication de la demande:
**24.06.81 Bulletin 81/25**

(45) Mention de la délivrance du brevet:
**27.03.85 Bulletin 85/13**

(84) Etats contractants désignés:
**BE DE GB IT**

(56) Documents cités:
**FR-A-2 125 412**

**RApport ORNL. 2265 "An analysis of power reactor fuel reprocessing" de F.L. Culler et al. 27 mars 1957. OAK RIDGE NATIONAL LABORATORY, Tennessee**

(73) Titulaire: **COMMISSARIAT A L'ENERGIE ATOMIQUE Etablissement de Caractère Scientifique Technique et Industriel B.P. 510 F-75752 Paris Cedex 15 (FR)**

(72) Inventeur: **Auchapt-Tavenaux, Jacqueline 6, rue de la Vieille Poste F-84000 Avignon (FR)**
Inventeur: **Auchapt, Pierre Villa 19 Les Cyprès F-30200 Bagnols sur Ceze (FR)**
Inventeur: **Sauvage, Henri 23, Allée du Romarin Les Cyprès F-30200 Bagnols sur Ceze (FR)**
Inventeur: **Tarnero, Maurice 6, Allée du Romarin Les Cyprès F-30200 Bagnols sur Ceze (FR)**

(74) Mandataire: **Mongrédien, André et al c/o BREVATOME 25, rue de Ponthieu F-75008 Paris (FR)**

Courier Press, Leamington Spa, England.

## Description

L'invention concerne un appareil permettant de traiter en continu des composés dans un liquide corrosif, un tel appareil étant particulièrement adapté pour dissoudre des combustibles nucléaires dans de l'acide nitrique bouillant lors du retraitement de ces combustibles.

Au cours des différentes étapes de retraitement des combustibles nucléaires, on sait que les aiguilles contenant ce combustible sont généralement ci-saillées en tronçons avant d'être plongées dans un bain d'acide nitrique bouillant destiné à séparer le combustible des parties mécaniques. Le combustible nucléaire est ainsi dissous dans l'acide nitrique, alors que les tronçons de gaines, appelés "coques", ainsi que les autres parties métalliques ne sont pas dissoutes.

Parmi les différents appareils connus permettant de réaliser la dissolution du combustible nucléaire dans l'acide nitrique, on connaît notamment un appareil dans lequel l'acide est reçu dans une cuve fixe, les tronçons de gaines étant introduits successivement dans les godets d'une roue à godets qui tourne de façon à plonger les tronçons dans l'acide, puis à ressortir les "coques" et les autres parties non dissoutes afin de les évacuer hors de l'appareil. Dans cet appareil connu, la roue à godets est entraînée et supportée par un axe traversant les parois de la cuve, cet axe étant sollicité en rotation par un moteur disposé à l'extérieur de la cuve. Le guidage axial de la roue à godets est assuré en outre par un système de rails et de rouleaux disposé entre la cuve et la périphérie externe de la roue. Un tel appareil est connu du rapport ORNL 2265 "An analysis of power reactor fuel reprocessing" de Fl. Culler et al, 29 may 1957, Oak Ridge National Laboratory, Tennessee.

Cet appareil connu présente différents inconvénients résultant principalement du caractère corrosif de l'acide nitrique chaud utilisé.

L'un de ces inconvénients est dû à l'entraînement en rotation de la roue par un arbre traversant les parois de la cuve au niveau de l'axe de la roue, c'est-à-dire dans une partie de la cuve située juste au-dessus du niveau de l'acide. Au cours de la réaction de dissolution des combustibles nucléaires dans l'acide nitrique, il se produit au niveau de la surface de celui-ci un bouillonnement conduisant à la projection d'acide bouillant au-dessus du niveau occupé par l'acide au repos. Cette projection d'acide a pour conséquence d'endommager très rapidement les joints d'étanchéité tournants nécessaires à la traversée étanche de l'arbre d'entraînement de la roue.

Un autre inconvénient de cet appareil connu, ayant également pour origine le caractère corrosif de l'acide nitrique bouillant, réside dans la disposition d'un certain nombre de rouleaux de guidage de la roue directement dans l'acide. Cette caractéristique risque de conduire très rapidement à une dégradation de ces rouleaux les rendant pratiquement inutilisables. Ce dernier inconvénient est d'autant plus important qu'il ne paraît pas possible de démonter ni de remplacer les rouleaux dans l'appareil décrit.

La présente invention a essentiellement pour objet la réalisation d'un appareil pour traiter des composés dans un liquide corrosif, et notamment pour dissoudre les combustibles nucléaires dans l'acide nitrique lors du retraitement de ces combustibles, sensiblement, du même type que l'appareil connu décrit précédemment, mais ne présentant pas les inconvénients de cet appareil.

Dans ce but, et conformément à l'invention, il est proposé un appareil pour traiter des composés dans un liquide corrosif, comprenant une cuve fixe recevant le liquide, un support rotatif, d'axe horizontal, portant à se périphérie au moins un godet de reception du composé à traiter, des moyens pour admettre le composé dans le godet, des moyens pour évacuer le composé hors du godet, des moyens pour entraîner le support rotatif en rotation autour de son axe, comprenant un ensemble moteur, et des moyens pour guider le support rotatif dans sa rotation autour de son axe, cet appareil etant caractérisé en ce que les moyens de guidage sont constitués par des moyens de sustentation disposés entièrement à l'intérieur de la cuve et en ce que les moyens de guidage et les moyens d'entraînement sont disposés au-dessus d'un plan horizontal passant par l'axe du support rotatif.

Ainsi, conformément à l'invention, les organes mécaniques assurant l'entraînement et le guidage de la roue à godets sont disposés entièrement dans la partie supérieure de la cuve située au-dessus du niveau du liquide, ce dernier étant toujours localisé en-dessous de l'axe de la roue à godets. Cette caractéristique permet de supprimer à peu près totalement les effets de la corrosion par l'acide nitrique liquide, sur les parties mécaniques et sur le joint tournant nécessaire à l'entraînement en rotation de la roue par un moteur externe.

Selon un mode de réalisation préféré de l'invention, les moyens de sustentation sont disposés symétriquement par rapport à un plan vertical passant par l'axe du support rotatif. De préférence, les moyens de sustentation comprennent alors deux séries d'au moins un galet disposées symétriquement par rapport audit plan vertical.

Selon une autre caractéristique de l'invention, l'appareil comprend un couvercle amovible fermant la cuve de façon étanche et portant le support rotatif par l'intermédiaire des moyens de guidage. Les moyens pour admettre le composé dans le liquide peuvent alors comprendre une goulotte d'entrée comportant une partie externe portée par la cuve et une partie interne portée par le couvercle, la goulotte d'entrée débouchant dans une trémie portée par le couvercle, et les moyens pour évacuer le composé hors du godet peuvent comprendre une goulotte de sortie comportant une partie externe portée par la cuve et une partie interne portée par le couvercle.

Lorsque l'appareil selon l'invention comprend un couvercle amovible, l'ensemble moteur est, de préférence externe à la cuve et commande la rotation d'un arbre traversant le couvercle et portant un pignon d'entraînement disposé à l'intérieur de la cuve et coopérant avec une roue dentée solidaire du support rotatif. L'axe de l'arbre peut alors être vertical, l'étanchéité entre l'arbre et le couvercle étant réalisée au moyen d'une garde hydraulique.

Conformément à encore une autre caractéristique de l'invention, l'appareil comprend également des moyens de recentrage du godet par rapport aux moyens pour admettre le composé dans le godet.

Lorsque le support rotatif est supporté par des galets et lorsque la cuve est fermée par un couvercle amovible, les galets sont portés de préférence par ce couvercle, chaque galet étant alors reçu sur un arbre assujetti au couvercle par des moyens de fixation démontables, l'axe dudit arbre au niveau du galet étant excentré par rapport à son axe au niveau du couvercle, de façon à permettre le démontage des galets par rotation desdits arbres.

Conformément à encore une autre caractéristique de l'invention, le fond de la cuve est incliné de façon à définir une rampe amenant les composés tombés accidentellement dans la cuve en vis-à-vis d'un système d'aspiration qui réintroduit ces composés dans le godet.

On décrira maintenant, à titre d'exemple non limitatif, un mode de réalisation particulier de l'invention en se référant aux dessins annexés dans lesquels:

— la figure 1 est une vue en élévation, en coupe partielle, d'un appareil destiné à la dissolution des combustibles nucléaires dans de l'acide nitrique,
— la figure 2 est une vue en coupe transversale de l'appareil représenté sur la figure 1 effectuée au niveau de l'axe de la roue à godets,
— la figure 3 est une vue agrandie représentant le mécanisme d'entraînement en rotation de la roue à godets ainsi que le système de recentrage de cette roue, et
— la figure 3a représente un détail du système de recentrage.

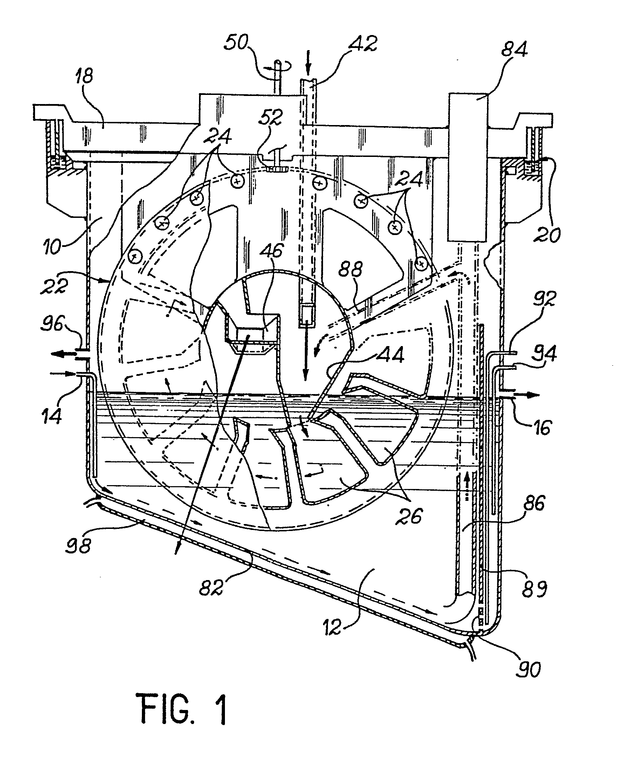

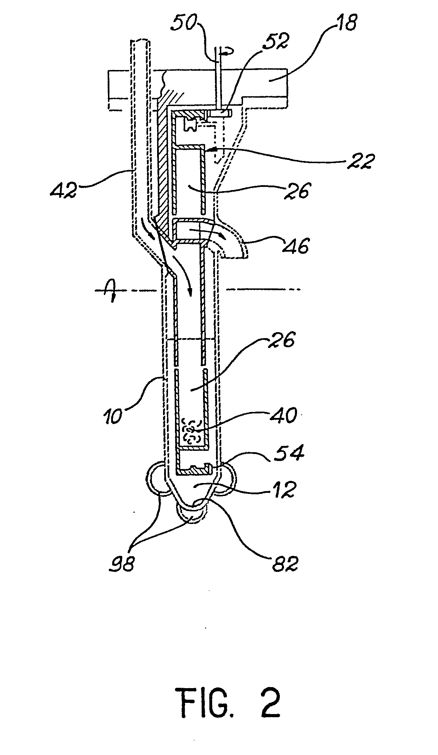

L'appareil pour traiter des composés dans un liquide corrosif représenté sur les figures 1 et 2 est plus particulièrement adapté à la dissolution de combustibles nucléaires dans de l'acide nitrique bouillant au cours du retraitement de ces combustibles.

A cet effet, cet appareil comprend une cuve 10 dans laquelle de l'acide nitrique 12 est admis au moyen d'une tuyauterie d'entrée 14. Le niveau de l'acide dans la cuve est établi au moyens d'une tuyauterie de sortie 16 en forme de trop-plein, par laquelle s'échappe le combustible nucléaire en solution dans l'acide lors du fonctionnement de l'appareil.

La cuve 10 est étanche et fermée à sa partie supérieure par un couvercle 18. L'étanchéité entre la cuve 10 et le couvercle 18 est assurée par une garde hydraulique 20.

Conformément à l'invention, le couvercle 18 porte un support rotatif à axe vertical 22 par l'intermédiaire de moyens de guidage et de sustentation constitués dans le mode de réalisation représenté par deux séries de quatre galets 24 disposées symétriquement par rapport au plan vertical passant par l'axe du support 22.

Come l'illustre en particulier la figure 1, le support rotatif 22 est constitué par une roue à godets comprenant un certain nombre de godets 26 identiques et régulièrement répartis à la périphérie de la roue 22, chacun des godets 26 débouchant à l'intérieur de cette dernière. En pratique, le niveau de l'acide 12 ou de la solution de combustibles nucléaires dans l'acide déterminé par le trop-plein 16 se trouve en-dessous de l'axe de la roue 22.

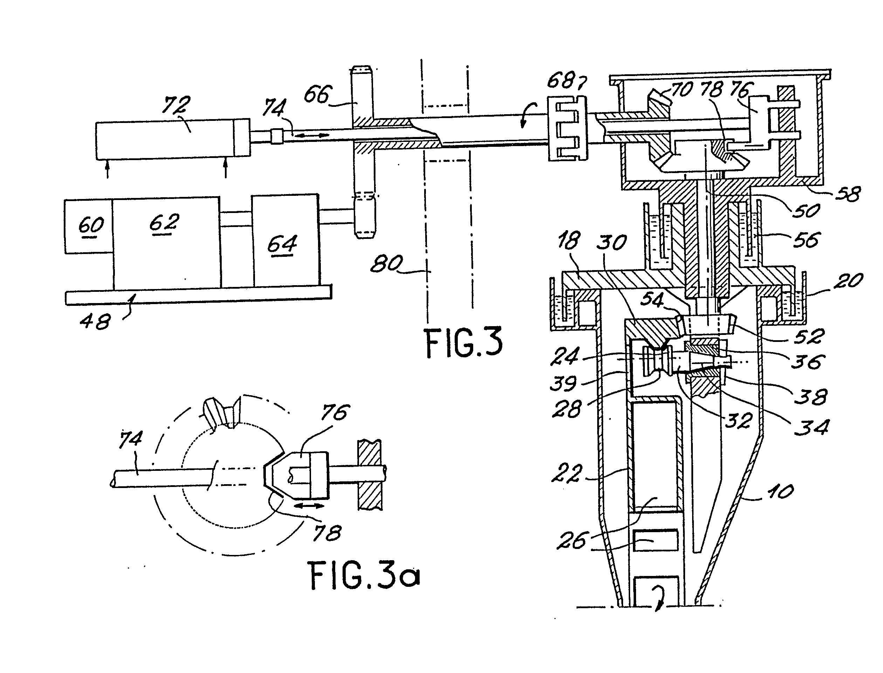

L'un des galets 24 constituant les moyens de sustentation et de guidage de la roue 22 est représenté à plus grande échelle sur la figure 3. Comme l'illustre cette figure, chacun des galets 24 comprend une gorge 28 dans laquelle est reçue une saillie annulaire 30 formée sur la face interne de la jante de la roue 22. La coopération de la saillie 30 avec la gorge 28 des galets 24 assure le guidage axial de la roue 22 par rapport au couvercle 18 et, par conséquent, par rapport à la cuve 10. Chaque galet 24 est monté tournant par l'intermédiaire des roulements à billes ou à rouleaux (non représentés) sur un arbre 32 fixé de façon démontable au couvercle 18. A cet effet, l'arbre 32 comprend une partie tronconique 34 reçue dans un fourreau 36 fixé au couvercle 18 par tous moyens appropriés tels que, par exemple, par vissage. Un coin 38 traverse l'extrémité libre de l'arbre 32 et prend appui sur le fourreau fixe 36 de façon à immobiliser par frottement l'arbre 32 dans le fourreau 36. En outre, la partie de l'arbre 32 portant le galet 24 est excentrée par rapport à la partie tronconique 34, de façon à permettre le démontage du galet 24 par rotation de l'arbre 32 à l'intérieur du fourreau 36, après démontage du coin 38. Des trous 39 percés dans la jante de la roue 22 permettent alors le passage de l'ensemble constitué par le galet 24 et l'arbre 32 lorsque cet ensemble doit être contrôlé ou remplacé.

Comme le montrent en particulier les figures 1 et 2, les tronçons de gaines 40 contenant les combustibles nucléaires à retraiter sont introduits successivement dans chacun des godets 26 de la roue 22 lors de la rotation de celle-ci par des moyens d'admission comprenant une goulotte 42, sensiblement verticale, comportant une partie externe fixée à la cuve 10 et une partie interne portée par le couvercle 18. La goulotte 42 débouche au-dessus d'une trémie 44 également portée par le couvercle 18 et dont l'extrémité pénètre dans l'acide 12 de façon à forcer les tronçons de gaines 40 à pénétrer par l'ouverture du godet 26 située en vis-à-vis de la trémie 44.

L'appareil selon l'invention comprend également des moyens pour évacuer les "coques" restant après dissolution des combustibles nucléaires dans l'acide. Ces moyens sont constitués par une goulotte 46 comportant une partie interne portée par le couvercle 18 et une partie externe portée par la cuve 10.

Conformément à l'invention, et comme l'illustre notamment la figure 3, l'entraînement en rotation de la roue 22 autour de son axe est effectué au moyen d'un ensemble moteur 48 commandant la rotation d'un arbre d'entraînement 50 traversant le couvercle 18 pour solliciter en rotation un pignon d'entraînement 52 disposé à l'intérieur de la cuve 10. La denture du pignon 52 coopère avec une roue dentée 54 solidaire de la roue à godets 22, de façon à entraîner celle-ci en rotation lors de la mise en oeuvre de l'ensemble moteur 48. L'étanchéité de la traversée du couvercle 18 par l'arbre 50 est obtenue au moyen d'une garde hydraulique 56 définie entre le couvercle 18 et un boîtier 58 supportant l'arbre 50. Plus précisément, l'ensemble moteur 48 comprend un moteur 60 commandant par l'intermédiaire d'un motoréducteur 62, d'un système d'embrayage et de freinage électrique 64, d'un réducteur 66, d'un accouplement 68 et d'un renvoi d'angle 70, la rotation d'arbre 50. Comme l'illustre la figure 1, l'axe de l'arbre 50 et du pignon 52 est disposé dans le plan vertical passant par l'axe de la roue 22.

De préférence, et afin d'assurer le parfait alignement de l'embouchure de la trémie 44 avec l'ouverture du godet correspondant 26, des moyens de recentrage sont associés aux moyens d'entraînement en rotation de la roue 22. Ces moyens de recentrage comprennent dans le mode de réalisation représenté un vérin de commande 72 assurant par l'intermédiaire d'un tige 74 le déplacement radial d'un organe mobile en forme de coin 76 par rapport à une came 78 solidaire de l'arbre 50, le coin 76 et la came 78 étant représentés en vue de dessus sur la figure 3a. A titre d'exemple, lorsque les godets 26 supportés par la roue 22 sont au nombre de douze, les rapports de denture du pignon 52 et de la roue dentée 54 sont calculés pour que le pignon 52 effectue un tour complet lorsque la roue 54 effectue 1/12$^e$ de tour. Il en résulte que le pignon 52, l'arbre 50 et la came 78 effectuent un tour complet lors de la rotation de la roue 22 correspondant au passage de deux godets 26 successifs en vis-à-vis de la trémie 44.

Dans le mode de réalisation représenté sur la figure 3 le renvoi d'angle 70 ainsi que l'organe mobile 76 et la came 78 sont disposés à l'intérieur du boîtier 58, et la tige de commande 74 de l'organe 76 passe dans des arbres creux portant le pignon esclave du réducteur 66, l'accouplement 68 et le pignon d'attaque du renvoi d'angle 70.

Lors du retraitement des combustibles nucléaires, l'appareil de dissolution est placé de préférence à l'intérieur d'une cellule de confinement (non représentée) dont la paroi 80 passe entre le réducteur 66 et l'accouplement 68 comme le montre schématiquement la figure 3.

Conformément à l'invention, les galets 24 assurant la sustentation et le guidage de la roue 22 sont disposés entièrement à l'intérieur de la cuve 10 et au-dessus du plan horizontal passant par l'axe de la roue à godets 22, ce plan étant lui-même situé au-dessus du niveau de l'acide 12 contenu dans la cuve. De même, les moyens d'entraînement en rotation de la roue 22 que constituent le pignon 52 et l'arbre 50 sont disposés entièrement au-dessus du plan passant par l'axe du support rotatif, c'est-à-dire dans la partie supérieure de la cuve. Cette disposition permet de supprimer à peu près tous risques de corrosion directe des galets 24 et du mécanisme d'entraînement et de remplacer par une garde hydraulique les joints tournants utilisés habituellement au niveau de la traversée de la cuve par un arbre d'entraînement horizontal.

Comme l'illustrent en particulier les figures 1 et 2, en raison des conditions de sûreté-criticité imposées notamment lors du retraitement des combustibles nucléaires en provenance d'un réacteur du type surrégénérateur, la cuve 10 est plate et d'épaisseur à peine supérieure à l'épaisseur de la roue 22. Elle présente dans le plan de la roue la forme d'un trapèze rectangle dont le côté incliné 82 définit le fond de la cuve. A titre d'exemple, le fond 82 de la cuve 10 peut être incliné à environ 20°. Un élévateur à bulles 84, porté par le couvercle 18, comprend un tube 86 qui plonge dans l'acide 12 et dont l'extrémité débouche dans la partie la plus profonde de la cuve 10. Le fond incliné 82 et l'élévateur 84 permettent de recycler vers la trémie 44, par l'intermédiaire d'un conduit 88, les "coques" ou autres éléments solides tombés accidentellement dans le fond de la cuve 10.

Un tranquilliseur 89 est disposé verticalement dans la cuve 10 au niveau de la partie la plus profonde de celle-ci, de façon à filtrer par exemple au moyen d'une grille 90 la solution de combustibles nucléaires dans l'acide avant que celle-ci ne s'échappe par la tuyauterie de sortie 16. Le tranquilliseur 89 permit ainsi d'éviter tout échappement accidentel de composés solides par la tuyauterie de sortie. Une tuyauterie de vidange 92, ainsi que différentes tuyauteries de contrôle 94 sont également disposées en aval du tranquilliseur 89. Les tuyauteries de contrôle 94 peuvent être constituées notamment par des cannes de bullage de mesure de niveau, de densité, les gaines des sondes de température, etc. En outre, une tuyauterie 96 permet aux gaz de dissolution de s'échapper de la cuve 10.

L'appareil selon l'invention comporte également des moyens de chauffage constitués dans le mode de réalisation représente par des demi-coquilles 98 solidaires de la paroi externe de la cuve et disposées le long du fond 82 de celle-ci, dans lesquelles circule un fluide caloporteur permettant de porter à ébullition l'acide nitrique 12.

L'élévateur à bulles 84 est porté par le couvercle 18, de préférence de façon amovible par l'intermédiaire d'une garde hydraulique (non représentée), de telle qu'il peut être éventuellement démonté et remplacé par un grappin ou par un système de pompage plus puissant si un composé solide de trop grande dimension tombe dans la cuve 10.

L'appareil de dissolution de combustibles nucléaires dans de l'acide nitrique qui vent d'être décrit en se référant aux figures 1 à 3 fonctionne de la façon suivante.

Lorsque la cuve 10 est remplie d'acide nitrique par la tuyauterie d'entrée 14 jusqu'au niveau défini par la goulotte de sortie 16, celui-ci est porté à ébullition par la mise en oeuvre des moyens de chauffage 98. La roue 22 étant immobile et son centrage correct ayant été contrôlé en débrayant l'accouplement 68 et en mettant en oeuvre le vérin 72 de façon à amener le coin 76 à l'intérieur de la came 78, l'un des godets 26 se trouve placé en vis-à-vis de l'embouchure de la trémie 44, de telle sorte qu'une certaine quantité de tronçons d'aiguilles contenant du combustible nucléaire peut être introduite par la goulotte 42. Lorsque cette introduction est terminée, on met en oeuvre le moteur électrique 60 après avoir embrayé l'accouplement 68, de façon à faire tourner l'arbre 50, le pignon 52 et la came 78 d'un tour complet. La roue 22 a alors tourné d'1/12e de tour, de telle sorte que le godet suivant 26 vient en vis-à-vis de l'embouchure de la trémie 44. Un nouveau chargement peut alors être effectué par la goulotte 42, après contrôle du centrage du godet par rapport à la trémie au moyen du coin 76 et de la came 78.

La rotation de la roue 22 et le chargement des godets 26 s'effectuent ainsi de façon discontinue et à une vitesse telle que la totalité du combustible nucléaire contenu dans les tronçons introduits dans les godets se trouve dissoute dans l'acide 12 et évacuée sous forme de solution par la tuyauterie 16. Lorsque les godets émergent de l'acide, ils ne contiennent donc plus que des composés solides tels que des "conques" qui sont également évacués de façon discontinue des godets par gravité lorsque l'extrémité ouverte des godets se trouve pratiquement à la partie inférieure de ceux-ci et en vis-à-vis de la goulotte de sortie 46.

Si des particules solides tombent accidentellement au fond de la cuve lors du fonctionnement de l'appareil, ces particules descendent dans la partie la plus profonde de la cuve, à la fois en raison de la pente du fond 82 et en raison de la proximité des moyens de chauffage 98 qui provoquent la formation de bulles à proximité de la paroi 12 tendant à soulever ces particules et à favoriser leur glissement vers la partie la plus profonde. Les particules se trouvent alors à proximité immédiate de l'extrémité de la conduite 86 de l'élévateur à bulles 84, de telle sorte qu'elles sont aspirées en même temps que la solution 12 et refoulées par la conduite 88 dans la trémie 84, de façon à être introduites dans le godet 26 disposé à ce moment en vis-à-vis de la trémie. La grille 90 disposée à la base du tranquilliseur 89 élimine tout risque de voir ces particules solides se mélanger à la solution sortant par la tuyauterie 16.

En raison de la disposition des galets 24 dans la partie supérieure de la cuve 10, ceux-ci ne sont pas soumis à l'attaque directe de l'acide nitrique liquide. Cependant, il peut être nécessaire pour des raisons quelconques, et notamment par suite de l'usure mécanique des galets 28 qui peut se trouver accélérée sous l'effet des vapeurs de dissolution, de contrôler ou de remplacer l'un des galets. Il peut également être nécessaire d'inspecter ou même de changer la cuve 10 ou la roue 22 en raison notamment de la corrosion à laquelle elles sont soumises par l'acide nitrique bouillant.

Conformément à l'invention, ces différentes opérations peuvent être réalisées facilement en séparant la cuve 10 de l'ensemble constitué par le couvercle 18, par les galets 24 et par la roue 22. Si l'un quelconque des galets 24 doit être démonté ou remplacé, cette opération peut alors être effectuée simplement en démontant le coin 38 de façon à permettre à l'arbre 32 de tourner par rapport au fourreau 36. Etant donné que la partie de l'arbre 32 portant le galet 24 est excentrée par rapport à la partie tronconique 34, cette rotation dégage la saillie annulaire 30 de la gorge 28 et autorise le démontage de l'ensemble constitué par le galet 24 et par l'arbre cônique 32 et par le fourreau 36 en dévissant ce dernier du couvercle 18. Bien entendu, au cours de cette opération, la roue 22 reste supportée par les autres galets 24.

On remarquera enfin que l'extrémité de la tuyauterie d'arrivée 14 de l'acide 12 débouche à la partie haute du fond 82 de la cuve 10, ce qui permet d'assurer le rinçage du fond de la cuve en cas de vidange de celle-ci par la canalisation 92.

**Revendications**

1. Appareil pour traiter des composés dans un liquide corrosif, comprenant une cuve fixe (10) recevant le liquide (12), un support rotatif (22), d'axe horizontal, portant à sa périphérie au moins un godet de réception (26) du composé à traiter des moyens (42) pour admettre le composé dans le godet, des moyens (46) pour évacuer le composé hors du godet, des moyens (50) pour entraîner le support rotatif en rotation autour de son axe, compressant un ensemble moteur (48), et des moyens (24) pour guider le support rotatif dans sa rotation autour de son axe, caractérisé en ce que les moyens de guidage (24) sont constitués par des moyens de sustentation disposés entièrement à l'intérieur de la cuve (10) et en ce que les moyens de guidage (24) et les moyens d'entraînement (50) sont disposés au-dessus d'un plan horizontal passant par l'axe du support rotatif (22).

2. Appareil selon la revendication 1, caractérisé en ce que les moyens de sustentation (24) sont disposés symétriquement par rapport à un plan vertical passant par l'axe du support rotatif.

3. Appareil selon la revendication 2, caractérisé en ce que les moyens de sustentation comprennent deux séries d'au moins un galet (24) disposées symétriquement par rapport audit plan vertical.

4. Appareil selon l'une quelconque des revendications précédentes, caractérisé en ce qu'il comprend un couvercle (18) amovible fermant la cuve (10) de façon étanche et portant le support rotatif (22) par l'intermédiaire des moyens de guidage (24).

5. Appareil selon la revendication 4, caractérisé en ce que les moyens pour admettre le composé dans le liquide comprennent une goulotte d'entrée (42) comportant une partie externe portée par la cuve (10) et une partie interne portée par le couvercle (18), ladite goulotte (42) débouchant dans une trémie (44) portée par la couvercle (18), et en ce que les moyens pour évacuer le composé hors du godet comprennent une goulotte de sortie (46) comportant une partie externe portée par la cuve (10) et une partie interne portée par le couvercle (18).

6. Appareil selon l'une quelconque des revendications 4 ou 5, caractérisé en ce que l'ensemble moteur (48) est externe à la cuve et commande la rotation d'un arbre (50) traversant le couvercle (18) et portant un pignon d'entraînement (52) disposé à l'intérieur de la cuve (10) et coopérant avec une roue dentée (54) solidaire du support rotatif (22).

7. Appareil selon la revendication 6, caractérisé en ce que l'axe de l'arbre (50) est vertical, l'étanchéité entre l'arbre (50) et le couvercle (18) étant réalisée au moyen d'un garde hydraulique (56).

8. Appareil selon l'une quelconque des revendications précédentes, caractérisé en ce qu'il comprend des moyens (72, 74, 76, 78) de recentrage du godet (26) par rapport aux moyens (42) pour admettre le composé dans le godet.

9. Appareil selon la revendication 8, caractérisé en ce que les moyens de recentrage comprennent une came (78) solidaire du pignon d'entraînement et un organe mobile (76) porté par le couvercle (18) et susceptible de venir engager la came pour assurer son positionnement par rapport au couvercle.

10. Appareil selon l'une quelconque des revendications 4 à 9, prise en combinaison avec la revendication 3, caractérisé en ce que les galets (24) sont portés par le couvercle (18), chaque galet étant reçu sur un arbre (32) assujetti au couvercle par des moyens de fixation démontables (38), l'axe dudit arbre (32) au niveau du galet (24) étant excentré par rapport à son axe au niveau du couvercle (18), de façon à permettre le démontage des galets (24) par rotation desdits arbres (32).

11. Appareil selon l'une quelconque des revendications précédentes, caractérisé en ce que le fond de la cuve (10) est incliné de façon à définir une rampe (82) amenant les composés tombés accidentellement dans la cuve en vis-à-vis d'un système d'aspiration (84, 86) qui réintroduit ces composés dans le godet (26).

12. Appareil selon l'une quelconque des revendications précédentes, caractérisé en ce que la cuve (10) porte des moyens de chauffage (98) du liquide qu'elle contient.

13. Appareil selon l'une quelconque des revendications précédentes, caractérisé en ce que des tuyauteries d'entrée (14) et de sortie (16) du liquide débouchent dans la cuve (10).

**Patentansprüche**

1. Vorrichtung zum Behandeln von Verbindungen in einer korrosiven Flüssigkeit, mit einem die Flüssigkeit (12) aufnehmenden, festen Behälter (10), einer um eine horizontale Achse drehbaren Stütze (22), die an ihrem Umfang wenigstens einen Aufnahmeeimer (26) für die zu behandelnde Verbindung trägt, Mitteln (62) zum Einbringen der Verbindung in den Eimer, Mitteln (46) zum Ausbringen der Verbindung aus dem Eimer, Mitteln (50) zum Antreiben der drehbaren Stütze in Drehung um ihre Achse, die eine Motoreinheit (48) und Mittel (24) umfaßt, um die drehbare Stütze bei ihrer Drehung um ihre Achse zu führen, dadurch gekennzeichnet, daß die Führungsmittel (24) von Abstützmitteln gebildet sind, die vollständig im Inneren des Behälters (10) angeordnet sind und daß die Führungsmittel (24) und die Antriebsmittel (50) oberhalb einer horizontalen Ebene angeordnet sind, welche durch die Achse der drehbaren Stütze (22) verläuft.

2. Vorrichtung nach Anspruch 1, dadurch gekennzeichnet, daß die Abstützmittel (24) symmetrisch im Bezug auf eine senkrechte Ebene angeordnet sind, die durch die Achse der drehbaren Stütze verläuft.

3. Vorrichtung nach Anspruch 2, dadurch gekennzeichnet, daß die Abstützmittel zwei Reihen von wenigstens einer Rolle (24) umfassen, die symmetrisch im Bezug auf die senkrechte Ebene angeordnet sind.

4. Vorrichtung nach irgendeinem der vorhergehenden Ansprüche, dadurch gekennzeichnet, daß die Vorrichtung einen entfernbaren Deckel (18) aufweist, der den Behälter (10) dicht schließt und mittels der Führungsmittel (24) die drehbare Stütze (22) trägt.

5. Vorrichtung nach Anspruch 4, dadurch gekennzeichnet, daß die Mittel zum Einbringen der Verbindung in die Flüssigkeit eine Einlaufrutsche (42) aufweisen die einen äußeren, von dem Behälter (10) getragenen Teil und einen inneren, von dem Deckel (18) getragenen Teil umfaßt, wobei die Rutsche (42) in einen von dem Deckel (18) getragenen Trichter (44) mündet, und daß die Mittel zum Ausbringen der Verbindung aus dem Eimer eine Austragrutsche (46) umfassen, die einen äußeren von dem Behälter (10) getragenen Teil und einen inneren, von dem Deckel (18) getragenen Teil aufweist.

6. Vorrichtung nach Anspruch 4 oder 5, dadurch gekennzeichnet, daß sich die Motoreinheit (48) außerhalb des Behälters befindet und die Drehung einer Welle (50) steuert, die durch den Deckel (18) hindurchgeht und ein Antriebsritzel (52) trägt, welches im Inneren des Behälters (10) angeordnet ist und mit einem fest mit der drehbaren Stütze (22) verbundenen Zahnrad (54) zusammenarbeitet.

7. Vorrichtung nach Anspruch 6, dadurch gekennzeichnet, daß die Achse der Welle (50) vertikal verläuft, wobei die Abdichtung zwischen der Welle (50) und dem Deckel (18) mittels einer hydraulischen Sperre (56) erfolgt.

8. Vorrichtung nach irgendeinem der vorhergehenden Ansprüche, dadurch gekennzeichnet, daß die Vorrichtung Mittel (72, 74, 76, 78) zum Zentrieren des Eimers (26) im Bezug auf die Mittel (42) zum Einbringen der Verbindung in den Eimer umfaßt.

9. Vorrichtung nach Anspruch 8, dadurch gekennzeichnet, daß die Mittel zum Zentrieren eine fest mit dem Antriebsritzel verbundene Kurvenscheibe (78) und ein bewegbares Organ (76) umfassen, welches von dem Deckel gehalten und mit der Nockenscheibe in Eingriff bringbar ist, um seine Positionierung in Bezug auf den Deckel sicher zu stellen.

10. Vorrichtung nach irgendeinem der Ansprüche 4 bis 9 in Kombination mit Anspruch 3, dadurch gekennzeichnet, daß die Rollen (24) von dem Deckel (18) getragen sind, wobei jede Rolle von einer Welle (32) aufgenommen ist, die mit entfernbaren Befestigungsmittel (38) mit dem Deckel verbunden ist, und daß die Achse der Welle (32) auf der Höhe der Rolle (24) in Bezug auf ihre Achse auf der Höhe des Deckels (18) derart exzentrisch ist, daß die Rollen (24) durch Drehung der Wellen (32) entfernbar sind.

11. Vorrichtung nach irgendeinem der vorhergehenden Ansprüche, dadurch gekennzeichnet, daß der Boden des Behälters (10) schräg derart geneigt ist, daß er eine Rampe (82) festlegt, die die unbeabsichtigt in den Bahälter gefallenen Verbindungen in Gegenüberlage eines Ansaugsystems (84, 86) bringt, welche diese Verbindungen in den Eimer (26) wieder einbringt.

12. Vorrichtung nach irgendeinem der vorhergehenden Ansprüche, dadurch gekennzeichnet, daß der Behälter (10) Heizmittel (98) für die in ihm enthaltene Flüssigkeit trägt.

13. Vorrichtung nach irgendeinem der vorhergehenden Ansprüche, dadurch gekennzeichnet, daß die Rohrleitungen für den Einlaß (14) und den Auslaß (16) der Flüssigkeit in den Behälter (10) münden.

## Claims

1. Apparatus for immersing composites in a corrosive liquid, comprising a fixed tank (10) for receiving the liquid (12), a rotatable member (22) having a horizontal axis, and having, on its periphery, at least one bucket (26) for receiving a composite to be treated, means (42) for introducing the composite into the bucket, means (46) for removing the composite from the bucket, means (50) comprising a motor assembly (48) for rotating the rotatable member around its axis, and means (24) for guiding the rotatable member during rotation around its axis, characterized in that the guide means (24) comprise suspension means entirely located inside the tank (10), and in that the guide means (24) and the rotating means (50) are disposed above a horizontal plane passing through the axis of the rotatable member (22).

2. Apparatus according to Claim 1, characterized in that the suspension means (24) are symmetrically disposed with respect to a vertical plane passing through the axis of the rotatable member.

3. Apparatus according to Claim 2, characterized in that the suspension means comprise two series of at least one roller (24) symmetrically disposed with respect to said vertical plane.

4. Apparatus according to any one of the preceding Claims, characterized in that it comprises a detachable lid (18) forming a fluid-tight closure on the tank (10) and supporting the rotatable member (22) through the suspension means (24).

5. Apparatus according to Claim 4, characterized in that means for introducing the composite into the liquid comprise an inlet duct (42) having an external portion carried by the tank (10) and an internal portion carried by the lid (18), said duct (42) opening into a hopper (44) carried by the lid (18), and in that the means for removing the composite from the bucket comprise an outlet duct (46) having an external portion carried by the tank (10) and an internal portion carried by the lid (18).

6. Apparatus according to either of Claims 4 or 5, characterized in that the motor assembly (48) is external of the tank and controls rotation of a shaft (50) passing through the lid (18) and having a driving pinion (52) located within the tank (10) and cooperating with a toothed wheel (54) unitary with the rotating member (22).

7. Apparatus according to Claim 6, characterized in that the axis of the shaft (50) is vertical, sealing between the shaft (50) and the lid (18) being provided by means of a liquid trap (56).

8. Apparatus according to any one of the preceding Claims, characterized in that it comprises means (72, 74, 76, 78) for positioning a bucket (26) with respect to means (42) for introducing the composite into the bucket.

9. Apparatus according to Claim 8, characterized in that the positionimg means comprise a cam (78) unitary with the driving pinion and a movable member (76) carried on the lid (18) and adapted to engage the cam to ensure positioning thereof with respect to the lid.

10. Apparatus according to any one of Claims 4 to 9, taken in combination with Claim 3, characterized in that the rollers (24) are carried by the lid (18), each roller being received on a shaft (32) connected to the lid by dismountable fixing means (38), the axis of said shaft, where it passes through the roller (24) being eccentric with respect to its axis where it meets the lid (18) whereby to permit dismounting of the rollers (24) by rotation of said shafts (32).

11. Apparatus according to any one of the preceding Claims, characterized in that the bottom of the tank (10) is inclined to define a ramp (82) conducting composite accidentally fallen into the tank towards an aspiration system (84, 86) for reintroducing composites into a bucket (26).

12. Apparatus according to any one of the preceding Claims, characterized in that the tank (10) has heating means (98) for liquid contained therein.

13. Apparatus according to any one of the preceding Claims, characterized in that inlet (14) and outlet (16) pipes for liquid open into the tank (10).

0 030 884

FIG. 1

FIG. 2

FIG.3

FIG.3a